# EUROPÄISCHE PATENTSCHRIFT

(11) **EP 0 532 462 B1**
(45) Veröffentlichungstag und Bekanntmachung des Hinweises auf die Patenterteilung: **26.02.1997**
(21) Anmeldenummer: 92810671.5
(22) Anmeldetag: 02.09.1992
(51) Int. Cl.: B01J 13/02, B01J 13/18, A01N 25/28

(54) **Pestizidinformulierungen in Form von Mikrokapseln**
Conditioning of pasticides in the form microcapsules
Conditionnement de pesticides sous la forme de microcapsules

(30) Priorität: 11.09.1991 CH 2669/91
(43) Veröffentlichungstag der Anmeldung: 17.03.1993
(73) Patentinhaber: CIBA-GEIGY AG, 4002 Basel (CH)
(72) Erfinder: Nastke, Rudolf, Dr., O-1505 Rehbrücke (DE); Leonhardt, Andreas, Dr., W-7800 Freiburg (DE); Neuenschwander, Ernst, Dr., CH-4125 Riehen (CH)

(56) Entgegenhaltungen:
- EP-A- 0 397 325
- DE-A- 2 434 406
- DE-A- 2 854 904
- US-A- 4 696 822
- PATENT ABSTRACTS OF JAPAN vol. 13, no. 267 (M-840)20. Juni 1989

## Beschreibung

Die vorliegende Erfindung betrifft eine neue Formulierung an sich bekannter Pestizide in Form von Mikrokapseln, ein Verfahren zur Herstellung von Mikrokapseln sowie die Verwendung von Mikrokapseln zur Bekämpfung von Unkräutern, Pflanzenkrankheiten, Insekten und Vertretern der Ordnung Acarina.

Die Herstellung von pestiziden Formulierungen durch Umsetzung von Harnstoff mit Formaldehyd in einem Molvehältnis von Harnstoff zu Formaldehyd von 1,35 : 1 bis 1 : 2 in wäßrigem Medium und anschließendem Einrühren des Vorkondensats in eine angesäuerte wäßrige Dispersion des Pestizids ist aus US-A-3,516,846 bekannt. Bei den gemäß US-A-3,516,846 hergestellten Formulierungen handelt es sich jedoch nicht um diskrete Mikrokapseln, sondern um ein Agglomerat schwammartiger Konsistenz mit wesentlich größerem Teilchendurchmesser und deutlich höherem Teilchengewicht. Diese Eigenschaften führen zu einer hohen Sedimentationsgeschwindigkeit der Agglomerate, was bei der Zubereitung und Lagerung von Spritzbrühen besonders nachteilig ist. Ferner kann die Abgabegeschwindigkeit des Wirkstoffs bzw. die Zersetzungsgeschwindigkeit der Teilchen nicht in zufriedenstellendem Maße gesteuert werden, da Größe und Oberfläche der Teilchen, bedingt durch die Schwammstruktur mit unterschiedlicher Agglomeratgröße, nicht exakt bestimmbar ist. Ferner ist die Verwendung von Formaldehyd aus ökologischer, toxikologischer und onkologischer Sicht problematisch.

Es war daher die Aufgabe der vorliegenden Erfindung, eine pestizide, Formaldehyd-freie Formulierung unter Verwendung eines Harnstoff-Aldehyd-Vorkondensats bereitzustellen, bei der der Wirkstoffträger in Form von diskreten Mikrokapseln mit definierter Oberfläche und Teilchengröße vorliegt.

Gemäß vorliegender Erfindung wird somit vorgeschlagen, Mikrokapseln in der Weise herzustellen, indem man eine wäßrige Lösung eines Vorkondensates aus Harnstoff und einem Dialdehyd ausgewählt aus der Gruppe Glutardialdehyd, Succindialdehyd, Adipindialdehyd, Maleindialdehyd, Malondialdehyd, 1,3-Diformylcyclopentan, o-Formylhydrozimtaldehyd, Phthaldialdehyd und Terephthaldialdehyd im Molverhältnis Harnstoff zu Dialdehyd von 1:1 bis 1:2,5 in eine angesäuerte wäßrige Dispersion eines mit Wasser nicht mischbaren Pestizids oder eines leichtflüchtigen mit Wasser nicht mischbaren Lösungsmittels einrührt.

Bei der Verwendung einer wäßrigen Dispersion aus schwerflüchtigen oder festen Pestiziden entstehen beim erfindungsgemäßen Verfahren diskrete Mikrokapseln, die das Pestizid enthalten. Bei der Verwendung einer wäßrigen Dispersion eines leichtflüchtigen mit Wasser nicht mischbaren Lösungsmittels entstehen Mikrokapseln, die das leicht flüchtige Lösungsmittel enthalten. Aus diesen Kapseln kann das Lösungsmittel auf einfache Weise, beispielsweise durch Sprühtrocknung, verdampft werden. Die so entstandenen hohlen Mikrokapseln eignen sich hervorragend zur Enkapsulierung von flüssigen oder niedrigschmelzenden Pestiziden. Für die Enkapsulierung ist es lediglich erforderlich, das zu verkapselnde flüssige Pestizid mit den Hohlkapseln zu vermischen. Das Pestizid penetriert durch die Kapselwand und füllt die Hohlkapsel aus. Das Verfahren gemäß vorliegender Erfindung ist insbesondere auch für die Enkapsulierung von wasserlöslichen Pestiziden geeignet, die nach gängigen Verfahren, welche meist von Dispersionen oder Emulsionen des Pestizids in Wasser ausgehen, nicht enkapsuliert werden konnten. Die vorliegende Erfindung betrifft auch Mikrokapseln, die nach oben beschriebenen Verfahren hergestellt wurden.

Ein weiterer Gegenstand der vorliegenden Erfindung sind pestizides Mittel in Form von Mikrokapseln mit einer Kapselwand aus einem Harnstoff-Dialdehyd-Polykondensat, die gemäß dem oben beschriebenen erfindungsgemäßen Verfahren hergestellt wurden, sowie ein Verfahren zur Bekämpfung von Unkräutern, Pflapzenkrankheiten, Insekten und Vertretern der Ordnung Acarina, das dadurch gekennzeichnet ist, daß man ein die erfindungsgemäßen Mikrokapseln enthaltendes Mittel in einer wirksamen Menge auf die Pflanzen, Insekten, Vertreter der Ordnung Acarina oder deren Lebensräume appliziert.

Für die Herstellung des Vorkondensats ist ein Molverhältnis von Harnstoff zu Dialdehyd von 1:1,5 bis 1:2,2 besonders vorteilhaft. Als Dialdehyd ganz besonders bevorzugt ist Glutardialdehyd.

Die Herstellung des Vorkondensats erfolgt unter basischen bis schwach sauren Bedingungen, vorzugsweise bei einem pH-Wert von 5,5 bis 9,5, besonders bevorzugt bei pH 7 bis 8. Die Einstellung des pH-Wertes ist unkritisch und kann beispielsweise mit wäßriger Natronlauge erfolgen. Die Vorkondensatherstellung kann bei Temperaturen von 25 bis 90°C durchgeführt werden, wobei ein Temperaturbereich von 50 bis 70°C bevorzugt ist. Die Umsetzung erfolgt innerhalb von 10 bis 120 Minuten, wobei eine Reaktionszeit von 30 bis 60 Minuten bevorzugt ist.

Die Vorkondensate sind lagerstabil, wobei die Lagerung vorzugsweise bei Temperaturen unter + 10 °C erfolgt.

Zum Ansäuern der wäßrigen Dispersion kann im allgemeinen jede wasserlösliche Säure verwendet werden. Gut geeignete Säuren sind beispielsweise Ameisensäure, Essigsäure, Zitronensäure, Salzsäure, Schwefelsäure oder Phosphorsäure, vorzugsweise Zitronensäure oder Salzsäure. Der pH-Wert der wäßrigen Dispersion liegt zwischen 1 bis 6, vorzugsweise zwischen 3 und 5.

Wird für die wäßrige Dispersion ein Pestizid verwendet, so ist als Pestizid ein Herbizid, insbesondere aus der Klasse der Harnstoffe, Sulfonylharnstoffe, Chloracetanilide oder Triazine, ein Insektizid oder Akarizid, insbesondere aus der Klasse der Thioharnstoffe, oder ein Fungizid, insbesondere aus der Klasse der Anilinopyrimidinderivate, bevorzugt.

Geeignete Herbizide sind beispielsweise Piperophos, Metolachlor, Pretilachlor, Chlortoluron, Terbuthylazin, Terbutryn, Dimethametrin, Isoproturon, Atrazin, Simazin, Fenclorim, Triasulfuron, Primisulfuron, Cinosulfuron und 3-(6-Methoxy-4-methyl-1,3,5-thazin-2-yl)-1-[2-(3,3,3-trifluorpropyl)-phenylsulfonyl]-harnstoff.

Geeignete Insektizide und Akarazide sind beispielsweise Brompropylat, Cypermethrin, Dichlorphos, Isazofos, Methidathion, Profenofos, Diazinon, und Furathiocarb und Diafenthiuron.

Geeignete Fungizide sind beispielsweise Metalaxyl, Pyroquilon, Penconazol, Fenpiclonil, Propiconazol, 2-Phenylamino-4-methyl-6-cyclopropyl-pyrimidin und Difenconazol.

Wird für die wäßrige Dispersion ein leichtflüchtiges mit Wasser nicht mischbaren Lösungsmittel verwendet, so sind als Lösungsmittel aliphatische oder aromatische Kohlenwasserstoffe oder deren Gemische bevorzugt. Besonders bevorzugte Lösungsmittel sind Pentan, iso-Pentan, Hexan, Heptan, Cyclohexan, Methylcyclohexan, Benzol, Toluol, Xylol, Diethylether, Dibutylether, Tetrahydrofuran oder Benzin.

Zur Enkapsulierung in die unter Verwendung eines leichtflüchtigen mit Wasser nicht mischbaren Lösungsmittels hergestellten Hohlkapseln eignen sich flüssige oder niedrigschmelzende Pestizide wie die Herbizide Piperophos, Metolachlor und Pretilachlor, die Insektizide und Akarizide Dichlorphos, Phosphamidon, Monocrotophos (niedrigschmelzend), Isazofos, Methidathion (niedrigschmelzend), Profenofos, Diazinon, und Furathiocarb (niedrigschmelzend) sowie die Fungizide Propiconazol und 2-Phenylamino-4-methyl-6-cyclopropyl-pyrimidin.

Die Steuerung der Wandstärke der das Pestizid enthaltenden Mikrokapsel erfolgt über das Verhältnis Pestizid zur eingesetzten Menge Vorkondensat. Die Steuerung der Wandstärke der Hohlkapseln erfolgt über das Verhältnis organischer Phase zur eingesetzten Menge Vorkondensat.

Die Teilchengröße der erfindungsgemäßen Mikrokapseln wird durch den Teilchendurchmesser der dispergierten Phase bestimmt. Der Teilchendurchmesser der dispergierten Phase korreliert seinerseits mit der Rührgeschwindigkeit Somit kann durch Variation der Rührgeschwindigkeit beim Dispergieren der dispersen Phase der Teilchendurchmesser beeinflußt werden. Zur Erzielung kleiner Teilchendurchmesser sind hohe Rührgeschwindigkeiten erforderlich. Die Teilchengrösse kann von der Rührgeschwindigkeit, der Art des Rührers und Reaktors, sowie den chemischphysikalischen Bedingungen abhängen, und muß im Einzelfall für die jeweilige Umsetzung (Rührertyp, Rührvolumen, Viskosität der Lösung etc.) bestimmt werden. Als Faustregel hat sich ergeben, dass die Umlaufgeschwindigkeit des Rührers zum Beispiel 3-16, vorzugsweise 4-8 m/sec beträgt, gemessen am entferntesten Punkt zur Drehachse des Rührers. Der Teilchendurchmesser liegt üblicherweise im Bereich von 1 bis 100 µm, vorzugsweise im Bereich von 1 bis 50 µm.

Die nachfolgenden Beispiele dienen der näheren Erläuterung der Erfindung. Sie sollen sie in keiner Weise beschränken.

### Herstellungsbeispiele:

### Beispiel H1: Herstellung eines Vorkondensats:

60 g Harnstoff werden unter Rühren in 800 g 25 Gew.% wäßriger Glutardialdehydlösung (2 Mol) gelöst. Nach Einstellen des pH-Wertes mit 1N wäßriger Natronlauge auf pH 7-8 wird die Lösung auf eine Temperatur von + 70 °C erwärmt und 10 bis 60 Minuten lang bei dieser Temperatur gerührt. Anschließend läßt man die Lösung auf Raumtemperatur abkühlen.

### Beispiel H2: Herstellung einer Hohlkapsel:

In einem Rührgefäß werden 200 ml Wasser, 100 ml Benzin und 15 ml 37%ige wäßrige Salzsäure vorgelegt und mit einem Dispergierrührer intensiv durchmischt. Anschließend wird das gemäß Beispiel H1 hergestellte Vorkondensat bei gleichbleibender Rührintensität schnell eingetragen. Nach 10 bis 15 Minuten hat sich das Vorkondensat unter Bildung von sphärischen Partikeln auf der Oberfläche der dispergierten Flüssigkeitströpfchen niedergeschlagen. Man erhält eine Suspension von Mikrokapseln, die Benzin enthalten. Diese Mikrokapseln bilden nach Verdampfung des Benzins durch Saugfiltration und einem anschließenden Trocknungsprozeß Hohlkugeln mit einem Durchmesser von 10 bis 150 µm, die zur Sorption flüssiger Pestizide geeignet sind. Gewünschtenfalls kann die Suspension nach der Zugabe des Vorkondensats 60 bis 90 Minuten gerührt werden, wobei jedoch die Scherkraft des Rührwerks entsprechend verringert wird.

### Beispiel H3: Atrazin (4-Ethylamino-2-chlor-6-isopropylamino-1,3,5-triazin) enthaltende Mikrokapseln:

In einem Rührgefäß werden 200 ml Wasser, 50 g Atrazin und 100 ml des gemäß Beispiel H1 erhaltenen Vorkondensats mit einem Rührer intensiv vermischt. Anschließend gibt man bei gleichbleibender Rührintensität 0,15 Mol wäßrige Salzsäure (32 Gew%) schnell hinzu. Nach 60 minütigem Rühren erhält man eine wäßrige Dispersion aus Atrazin enthaltenden Mikrokapseln, die direkt in eine Formulierung eingebunden oder nach Saugfiltration einem Trocknungsprozeß bei einer Temperatur von + 130 °C unterzogen werden können.

Beispiele H4 und H5: Bei gleicher Arbeitsweise wie in Beispiel H2 erhält man mit 0,05 bzw. 0,015 wäßrige Salzsäure (32 Gew%) anstatt 0,15 Mol wäßrige Salzsäure (32 Gew%) Mikrokapseln vergleichbarer Qualität.

### Beispiel H6: Triasulfuron 3-(6-Methoxy-4-methyl-1,3,5-triazin-2-yl)-1-[2-(2-chlorethoxy)-phenylsulfonyl]-harnstoff enthaltende Mikrokapseln:

In einem Rührgefäß werden 200 ml Wasser, 50 g Triasulfuron und 100 ml des gemäß Beispiel H1 erhaltenen Vorkondensats mit einem Rührer intensiv vermischt. Anschließend gibt man bei gleichbleibender Rührintensität 0,05 Mol wäßrige Salzsäure (32 Gew%) schnell hinzu. Nach 60 minütigem Rühren erhält man eine wäßrige Dispersion aus Triasulfuron enthaltenden Mikrokapseln, die direkt in eine Formulierung eingebunden oder nach Saugfiltration einem Trocknungsprozeß bei einer Temperatur von + 130 °C unterzogen werden können.

### Beispiel H7: 3-(6-Methoxy-4-methyl-1,3,5-triazin-2-yl)-1-[2-(3-trifluorpropyl)-phenylsulfonyl]-harnstoff enthaltende Mikrokapseln:

In einem Rührgefäß werden 200 ml Wasser, 50 g 3-(6-Methoxy-4-methyl-1,3,5-triazin-2-yl)-1-[2-(3-trifluorpropyl)-phenylsulfonyl]-harnstoff und 100 ml des gemäß Beispiel H1 erhaltenen Vorkondensats mit einem Rührer intensiv vermischt Anschließend gibt man bei gleichbleibender Rührintensität 0,15 Mol wäßrige Salzsäure (32 Gew%) schnell hinzu. Nach 60 minütigem Rühren erhält man eine wäßrige Dispersion aus 3-(6-Methoxy-4-methyl-1,3,5-triazin-2-yl)-1-[2-(3-trifluorpropyl)-phenylsulfonyl]-harnstoff enthaltenden Mikrokapseln, die direkt in eine Formulierung eingebunden oder nach Saugfiltration einem Trocknungsprozeß bei einer Temperatur von + 130 °C unterzogen werden können.

### Beispiel H8: 2-Phenylamino-4-methyl-6-cyclopropyl-pyrimidin enthaltende Mikrokapseln:

In einem Rührgefäß werden 200 ml Wasser, 50 g 2-Phenylamino-4-methyl-6-cyclopropyl-pyrimidin und 100 ml des gemäß Beispiel H1 erhaltenen Vorkondensats mit einem Rührer intensiv vermischt. Anschließend gibt man bei gleichbleibender Rührintensität 0,15 Mol wäßrige Salzsäure (32 Gew%) schnell hinzu. Nach 60 minütigem Rühren erhält man eine wäßrige Dispersion aus 2-Phenylamino-4-methyl-6-cyclopropyl-pyrimidin enthaltenden Mikrokapseln, die direkt in eine Formulierung eingebunden oder nach Saugfiltration einem Trocknungsprozeß bei einer Temperatur von + 130 °C unterzogen werden können.

Durch das Verfahren gemäß vorliegender Erfindung können Mikrokapseln aus Harnstoff und Dialdehyd in besonders einfacher Weise hergestellt werden. Neben der Tatsache, daß die Verwendung von Formaldehyd durch das erfindungsgemäße Verfahren vermieden werden kann, besteht ein besonderer Vorteil der vorliegenden Erfindung darin, daß zur Herstellung der Mikrokapseln keine zusätzlichen Dispergatoren benötigt werden.

## Patentansprüche

1. Verfahren zur Herstellung von Mikrokapseln, dadurch gekennzeichnet, daß man eine wäßrige Lösung eines Vorkondensates aus Harnstoff und einem Dialdehyd ausgewählt aus der Gruppe Glutardialdehyd, Succindialdehyd, Adipindialdehyd, Maleindialdehyd, Malondialdehyd, 1,3-Diformylcyclopentan, o-Formylhydroxyzimtaldehyd, Phthaldialdehyd und Terephthaldialdehyd im Molverhältnis Harnstoff zu Dialdehyd von 1:1 bis 1:2,5 unter schnellem Rühren in eine angesäuerte wäßrige Dispersion entweder
a) eines mit Wasser nicht mischbaren Pestizids einträgt; oder
b) eines leichtflüchtigen mit Wasser nicht mischbaren Lösungsmittels einträgt, den so erhaltenen Mikrokapseln das Lösungsmittel durch Trocknung entzieht und anschließend die Hohlkapseln mit dem flüssigen Pestizid vermischt.

2. Verfahren nach Anspruch 1, dadurch gekennzeichnet, daß das Molverhältnis von Harnstoff zu Dialdehyd 1:1,5 bis 1:2,2 beträgt.

3. Verfahren nach Anspruch 1, dadurch gekennzeichnet, daß man als Dialdehyd Glutardialdehyd verwendet.

4. Verfahren nach Anspruch 1, dadurch gekennzeichnet, daß man ein mit Wasser nicht mischbares Pestizid verwendet.

5. Verfahren nach Anspruch 4, dadurch gekennzeichnet, daß man als Pestizid ein Herbizid, Insektizid, Akarizid oder Fungizid verwendet.

6. Verfahren nach Anspruch 1, dadurch gekennzeichnet, daß man ein mit Wasser nicht mischbares leichtflüchtiges Lösungsmittel verwendet.

7. Verfahren nach Anspruch 6, dadurch gekennzeichnet, daß man als Lösungsmittel aliphatische oder aromatische Kohlenwasserstoffe oder deren Gemische verwendet.

8. Verfahren nach Anspruch 7, dadurch gekennzeichnet, daß man als organisches Lösungsmittel Pentan, iso-Pentan, Hexan, Heptan, Cyclohexan, Methylcyclohexan, Benzol, Toluol, Xylol, Dibutylether, Tetrahydrofuran oder Benzin verwendet.

9. Verfahren nach Anspruch 5, dadurch gekennzeichnet, daß man ein Herbizid aus der Klasse der Harnstoffe, Sulfonylharnstoffe, Chloracetanilide oder Triazine verwendet.

10. Verfahren nach Anspruch 5, dadurch gekennzeichnet, daß man ein Insektizid oder Akarizid aus der Klasse der Thioharnstoffe verwendet.

11. Pestizides Mittel in Form von Mikrokapseln, dadurch gekennzeichnet, daß die Mikrokapseln gemäß Anspruch 1 hergestellt sind.

12. Pestizides Mittel gemäß Anspruch 11, dadurch gekennzeichnet, daß es als Pestizid ein Herbizid, Insektizid, Akarizid oder Fungizid enthält.

13. Verfahren zur Bekämpfung von Unkräutern, Pflanzenkrankheiten, Insekten und Vertretern der Ordnung Acarina, dadurch gekennzeichnet, daß man ein Mittel gemäß Anspruch 11 in einer wirksamen Menge auf die Pflanzen, Insekten, Vertreter der Ordnung Acarina oder deren Lebensräume appliziert.

14. Mikrokapseln, hergestellt nach einem Verfahren gemäß einem der Ansprüche 1 bis 10.

## Claims

1. A process for the preparation of microcapsules, which comprises rapidly stirring an aqueous solution of a precondensate of urea and a dialdehyde selected from the group consisting of glutaraldehyde, succinaldehyde, adipaldehyde, malealdehyde, malonaldehyde, 1,3-diformylcyclopentane, o-formylhydroxycinnamaldehyde, phthalaldehyde and terephthalaldehyde, in a molar ratio of urea to dialdehyde of from 1:1 to 1:2.5, into an acidified aqueous dispersion of either
a) a water-immiscible pesticide, or
b) a readily volatile water-immiscible solvent, removing the solvent from the microcapsules so obtained by drying and subsequently mixing the hollow capsules with the liquid pesticide.

2. A process according to claim 1, wherein the molar ratio of urea to dialdehyde is from 1:1.5 to 1:2.2.

3. A process according to claim 1, wherein glutaraldehyde is used as the dialdehyde.

4. A process according to claim 1, wherein a water-immiscible pesticide is used.

5. A process according to claim 4, wherein a herbicide, an insecticide, an acaricide or a fungicide is used as the pesticide.

6. A process according to claim 1, wherein a water-immiscible readily volatile solvent is used.

7. A process according to claim 6, wherein aliphatic or aromatic hydrocarbons or mixtures thereof are used as solvent.

8. A process according to claim 7, wherein pentane, isopentane, hexane, heptane, cyclohexane, methylcyclohexane, benzene, toluene, xylene, dibutyl ether, tetrahydrofuran or white spirit is used as organic solvent.

9. A process according to claim 5, wherein a herbicide from the class of the ureas, sulfonyl ureas, chloroacetanilides or triazines is used.

10. A process according to claim 5, wherein an insecticide or an acaricide from the class of the thioureas is used.

11. A pesticidal composition in the form of microcapsules, wherein the microcapsules have been prepared according to claim 1.

12. A pesticidal composition according to claim 11, which comprises as pesticide a herbicide, an insecticide, an acaricide or a fungicide.

13. A method of controlling weeds, plant diseases, insects and representatives of the order Acarina, which comprises applying an effective amount of a composition according to claim 11 to the plants, insects and representatives of the order Acarina or to the loci thereof.

14. Microcapsules prepared by a process according to any one of claims 1 to 10.

## Revendications

1. Procédé pour la préparation de microcapsules, caractérise' en ce que l'on introduit, en agitant rapidement, une solution aqueuse d'un précondensat d'urée et d'un dialdéhyde choisi dans le groupe constitué par le glutardialdéhyde, le succindialdéhyde, le dialdéhyde adipique, le dialdéhyde maléique, le dialdéhyde malonique, le 1,3-diformylcyclopentane, l'aldéhyde o-formylhydroxycinnamique, le dialdéhyde phtalique et le dialdéhyde téréphtalique, dans un rapport molaire de l'urée au dialdéhyde allant de 1:1 à 1:2,5, dans une dispersion aqueuse acidifiée soit
a) d'un pesticide non miscible à l'eau, soit
b) d'un solvant facilement volatil, non miscible à l'eau, le solvant étant retiré des microcapsules ainsi obtenues par séchage et les capsules creuses étant ensuite mélangées avec le pesticide liquide.

2. Procédé selon la revendication 1, caractérisé en ce que le rapport molaire de l'urée au dialdéhyde est compris entre 1:1,5 et 1:2,2.

3. Procédé selon la revendication 1, caractérisé en ce que l'on utilise, comme dialdéhyde, le glutardialdéhyde.

4. Procédé selon la revendication 1, caractérisé en ce que l'on utilise un pesticide non miscible à l'eau.

5. Procédé selon la revendication 4, caractérisé en ce que l'on utilise, comme pesticide, un herbicide, un insecticide, un acaricide ou un fongicide.

6. Procédé selon la revendication 1, caractérisé en ce que l'on utilise un solvant facilement volatil non miscible à l'eau.

7. Procédé selon la revendication 6, caractérisé en ce que l'on utilise, comme solvant, des hydrocarbures aliphatiques ou aromatiques ou leurs mélanges.

8. Procédé selon la revendication 7, caractérisé en ce que l'on utilise, comme solvant organique, le pentane, l'isopentane, l'hexane, l'heptane, le cyclohexane, le méthylcyclohexane, le benzène, le toluène, le xylène, l'éther dibutylique, le tétrahydrofuranne ou la benzine.

9. Procédé selon la revendication 5, caractérisé en ce que l'on utilise un herbicide de la classe des urées, sulfonylurées, chloracétanilides ou triazines.

10. Procédé selon la revendication 5, caractérisé en ce que l'on utilise un insecticide ou un acaricide de la classe des thiourées.

11. Composition pesticide sous forme de microcapsules, caractérisée en ce que les microcapsules sont préparées selon la revendication 1.

12. Composition pesticide selon la revendication 11, caractérisée en ce qu'elle contient, comme pesticide, un herbicide, un insecticide, un acaricide ou un fongicide.

13. Procédé pour lutter contre les mauvaises herbes, les maladies des plantes, les insectes et les représentants de l'ordre des acariens, caractérisé en ce que l'on applique une composition selon la revendication 11 en une quantité efficace sur les plantes, les insectes, les représentants de l'ordre des acariens ou leurs habitats.

14. Microcapsules préparées par un procédé selon l'une des revendications 1 à 10.
